Europäisches Patentamt

European Patent Office

Office européen des brevets

(19)

(11) Veröffentlichungsnummer: **0 310 770 B1**

# (12) EUROPÄISCHE PATENTSCHRIFT

(45) Veröffentlichungstag der Patentschrift:
**13.03.91 Patentblatt 91/11**

(51) Int. Cl.$^5$: **F16J 15/34, F16J 15/38**

(21) Anmeldenummer: **88111987.9**

(22) Anmeldetag: **26.07.88**

(54) Verdrehsicherung.

(30) Priorität: **08.10.87 DE 3733970**

(43) Veröffentlichungstag der Anmeldung:
**12.04.89 Patentblatt 89/15**

(45) Bekanntmachung des Hinweises auf die
Patenterteilung:
**13.03.91 Patentblatt 91/11**

(84) Benannte Vertragsstaaten:
**AT BE CH DE ES FR GB GR IT LI LU NL SE**

(56) Entgegenhaltungen:
**DE-C- 863 883**
**DE-C- 3 412 594**
**E. MAYER: "Mechanical Seals", Ausgabe 2,**
**1972, Seiten 167-169, ILIFFE BOOKS, London,**
**GB**

(73) Patentinhaber: **Firma Carl Freudenberg**
**Höhnerweg 2-4**
**W-6940 Weinheim/Bergstrasse (DE)**

(72) Erfinder: **Kraus, Reinhold**
**Hoffeldstrasse 8**
**W-6942 Mörlenbach (DE)**

## Beschreibung

Die Erfindung betrifft eine Verdrehsicherung für den Gegenring einer Gleitringdichtung eines Gehäuses, umfassend eine Schrauben- oder Spiralfeder, die den Gegenring mit wenigstens einer elastisch angepreßten Windung umschließt, wobei die Anpreß- und die betriebsbedingte Belastungsrichtung der Windung identisch sind.

Eine solche Verdrehsicherung ist aus der DE-C-34 12 594 bekannt, sie ist zur Erzielung einer unverdrehbaren Festlegung des Gleitringes einer Gleitringdichtung in bezug auf die abzudichtende Welle bestimmt und bedient sich der Verwendung einer Kegelfeder, die im Bereich des einen Endes den Gleitring und im Bereich des anderen Endes die Welle mit wenigstens einer elastisch angepaßten Windung umschlingt. Die Anpreß- und die betriebsbedingte Belastungsrichtung sind hierbei nur identisch, wenn sich die Welle in einer ganz bestimmten Richtung dreht. Die Verdrehsicherung ist daher für Anwendungsfälle unbrauchbar, in denen mit einer wechselnden Drehrichtung gerechnet werden muß. Der Erfindung liegt die Aufgabe zugrunde, eine solche Verdrehsicherung derart weiter zu entwickeln, daß die Funktionssicherheit bei einem Wechsel der Drehrichtung keine Beeinträchtigung erfährt.

Diese Aufgabe wird erfindungsgemäß bei einer Verdrehsicherung der eingangs genannten Art dadurch gelöst, daß die Windung und beiden Enden in Richtung des Gehäuses verlängert und mit Haken versehen ist und daß die Haken hinter Radialflächen des Gehäuses einhängbar sind. Die durch jeweils einen Haken bewirkte Anpreßung der Windung an die Außenseite des Gegenringes erfährt hierdurch unabhängig vom Drehsinn des betriebsbedingt eingeleiteten Drehmomentes eine Steigerung. Unabhängig von der Drehrichtung ist dadurch stets eine ausgezeichnete Verdrehsicherung gewährleistet. Dennoch werden betriebsbedingte Drehschwingungen des Gegenringes in bezug auf das Gehäuse federnd aufgefangen. Sie können nicht zu einer unbeabsichtigten Zerstörung der Feder oder des Gegenringes führen.

Darüber hinaus gewährleistet die Verwendung einer Schrauben- oder Spiralfeder als Verdrehsicherung eine relativ große Winkelbeweglichkeit des Gegenringes in bezug auf das abstützende Gehäuse, was von großem Vorteil ist.

Der Gegenstand der vorliegenden Erfindung wird nachfolgend anhand der als Anlage beigefügten Zeichnung weiter erläutert. Es zeigen :

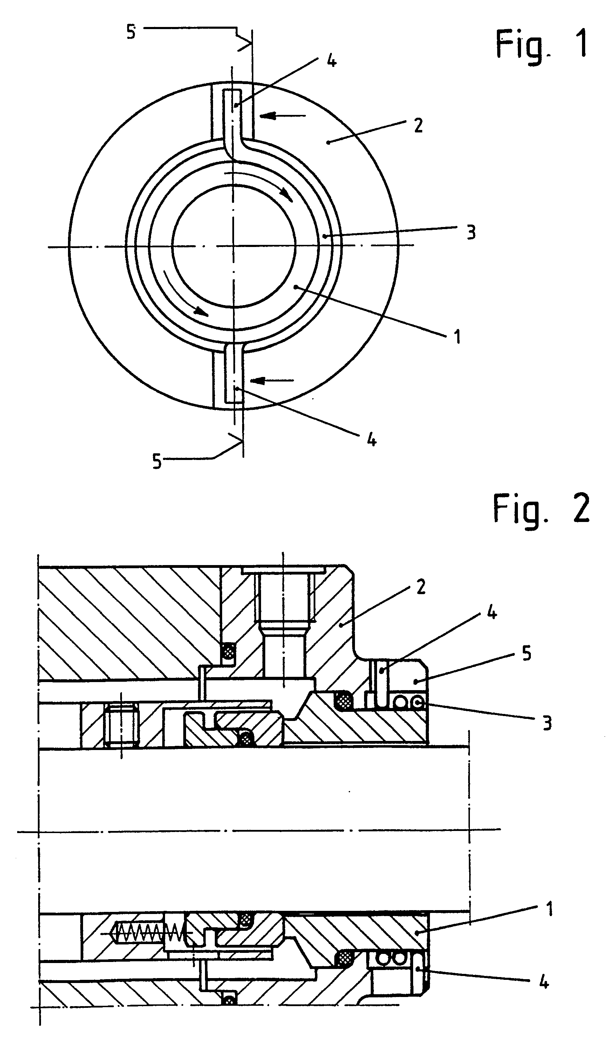

Figur 1 eine Verdrehsicherung der erfindungsgemäßen Art im eingebauten Zustand von vorn.

Figur 2 die Verdrehsicherung gemäß Figur 1 in längsgeschnittener Darstellung. Die in Figur 1 gezeigte Verdrehsicherung dient zur Verhinderung von relativen Verdrehungen des Gegenringes 1 in bezug auf das diesen umschließende Gehäuse 2. Sie besteht im wesentlichen aus einer Schraubenfeder, die die zylindrische Außenfläche des Gegenringes 1 mit 1,5 elastisch angepreßten Windungen umschlingt. Die Windungen enden beiderseits in radial vorstehenden Haken 4, von denen der untere unter der Wirkung des zu übertragenden, durch einen durchgehenden Pfeil angedeuteten Drehmomentes an der zugeordneten Radialfläche 5 des Gehäuses zur Anlage gelangt und auf Zug belastet wird. Die Anpressung der den Gegenring außenseitig berührenden Windung der Schraubenfeder wird dadurch erhöht.

Bei einem Wechsel der Drehrichtung gelangt der oben eingezeichnete Haken 4 zur Anlage der zugeordneten Radialfläche 5 des Gehäuses, während der unten dargestellte Haken entlastet wird. Auch in diesem Falle ergibt sich somit in Abhängigkeit von der Größe des zu übertragenden Drehmomentes eine zunehmende Anpressung der an dem Gegenring anliegenden Windungen der Schraubenfeder. Eine Relativverlagerung zwischen den genannten Windungen und der Außenseite des Gegenringes ist daher ganz unabhängig von der Drehrichtung nicht zu befürchten.

Durch Figur 2 wird die Anbringungsposition der Schraubenfeder verdeutlicht. Es ist zu ersehen, daß deren in radialer Richtung nach außen vorspringende Haken 4 sowohl oben als auch unten in axial geöffneten Ausnehmungen des Gehäuses 2 gelagert sind. Die Schraubenfeder läßt sich dadurch äußerst leicht montieren und bei Bedarf ersetzen. Sie gewährleistet zugleich eine unverlierbare Festlegung des Gegenringes 1 in bezug auf das Gehäuse 2. In bezug auf gelegentliche Wartungsarbeiten ist das von großem Vorteil.

## Ansprüche

1. Verdrehsicherung für den Gegenring (1) einer Gleitringdichtung eines Gehäuses (2), umfassend eine Schrauben- oder Spiralfeder (3), die den Gegenring (1) mit wenigstens einer elastisch angepreßten Windung umschließt, wobei die Anpreß- und die betriebsbedingte Belastungsrichtung der Windung identisch sind, dadurch gekennzeichnet, daß die Windung an beiden Enden in Richtung des Gehäuses (2) verlängert und mit Haken (4) versehen ist und daß die Haken (4) hinter Radialflächen (5) des Gehäuses (2) eingehängt sind.

## Claims

1. Anti-twisting safeguard for the counterring (1) of a mechanical seal of a housing (2), comprising a helical or spiral spring (3) which surrounds the counterring (1) with at least one coil pressed on resiliently, the direction in which the coil is pressed on and the direction of loading due to operation being identical, characterized in that the coil is lengthened at both ends in the direction of the housing (2) and is provided with hooks (4) and in that the hooks (4) are hooked in behind radial surfaces (5) of the housing (2).

## Revendications

1. Sécurité anti-rotation pour la contre-bague (1) d'un joint à bague glissante d'un logement (2) comprenant un ressort hélicoïdal ou spiralé (3) qui entoure la contre-bague (1) avec au moins un enroulement pressé élastiquement, tandis que la direction de compression et la direction de sollicitation dues au fonctionnement de l'enroulement sont identiques, caractérisée en ce que l'enroulement est prolongé aux deux extrémités en direction du logement (2) et est pourvu de crochets (4), et que les crochets (4) sont accrochés derrière les surfaces radiales (5) du logement (2).

Fig. 1

Fig. 2